# FASCICULE DE BREVET EUROPEEN

(11) **EP 1 435 062 B1**
(45) Date de publication et mention de la délivrance du brevet: **01.04.2009**
(21) Numéro de dépôt: 02777435.5
(22) Date de dépôt: 13.09.2002
(51) Int. Cl.: G06K 7/00

(54) **MODULATEUR POUR SIGNAUX ELECTROMAGNETIQUES EMIS PAR UN SYSTEME D'EMISSION/RECEPTION SANS CONTACT**
MODULATOR FÜR ELEKTROMAGNETISCHE SIGNALE AUSGESANDT VON EINEM KONTAKTLOSEN SENDER/EMPFÄNGER-SYSTEM
MODULATOR FOR ELECTROMAGNETIC SIGNALS TRANSMITTED BY A CONTACTLESS TRANSMISSION/RECEPTION SYSTEM

(30) Priorité: 14.09.2001 FR 0111917
(43) Date de publication de la demande: 07.07.2004
(73) Titulaire: ASK S.A., 06560 Valbonne (FR)
(72) Inventeur: PARRAULT, Olivier, F-06220 Golfe Juan (FR)
(86) Numéro de dépôt international: PCT/FR2002/003130
(87) Numéro de publication internationale: WO 2003/025832

(56) Documents cités:
- WO-A-00/46917
- US-A- 5 712 630

## Description

### Domaine technique

La présente invention concerne les antennes d'émission de signaux électromagnétiques se trouvant dans les lecteurs de système d'émission/réception sans contact et destinés à émettre des signaux électromagnétiques vers des objets portables sans contact, et concerne en particulier un modulateur pour signaux électromagnétiques émis par un système d'émission/réception sans contact.

### Etat de la technique

L'échange d'informations entre un objet sans contact et un système d'émission/réception sans contact s'effectue de manière générale par couplage électromagnétique à distance entre une première antenne logée dans l'objet sans contact et une deuxième antenne située dans le système d'émission/réception sans contact. L'objet est muni par ailleurs, d'un module électronique comportant la première antenne connectée à une puce électronique qui contient, entre autres, une partie radio-fréquence (RF), un microprocesseur et/ou une mémoire dans laquelle sont stockées les informations à fournir au système d'émission/réception sans contact et les fonctions logiques nécessaires pour élaborer les informations à émettre et traiter les informations reçues.

L'objet sans contact qui peut être un ticket ou une carte au.format carte de crédit est un système de plus en plus utilisé dans différents secteurs. Ainsi, dans le secteur des transports, le ticket sans contact jetable et la carte à puce sans contact ont été développés comme moyens de paiement pour les usagers des transports occasionnels et permanents. C'est le cas également du porte-monnaie électronique. De nombreuses sociétés ont également développé des moyens d'identification de leur personnel par cartes à puce sans contact.

Aujourd'hui, les transmissions de données entre le système d'émission/réception sans contact appelé communément lecteur et les cartes sans contact sont soumises à des normes ISO. Parmi les plus courantes, la norme ISO 14443 concerne les transmissions des données par communication radio entre une carte à puce et un lecteur et réciproquement. Cette norme couvre deux protocoles de transmission connus sous les noms de protocole de transmission de type "A" et protocole de transmission de type "B". Ces deux protocoles de transmission de données sans contact A et B diffèrent par le type de modulation utilisée pour la communication Radio Fréquence (RF) entre le lecteur et la carte d'une part, entre la carte et le lecteur d'autre part. On ne s'intéresse ici qu'aux signaux transmis du lecteur à la carte.

Dans le sens de transmission de données du lecteur à la carte, le protocole B prévoit une modulation d'amplitude correspondant à un taux de modulation de 10% du signal émis ou de l'onde porteuse électromagnétique par les données transmises, tandis que dans le protocole A, l'onde porteuse électromagnétique est modulée à 100% de son amplitude par les données transmises. Dans les deux cas, l'amplitude de l'onde porteuse électromagnétique émise périodique est maximum par défaut pendant un premier intervalle de temps t1 puis, pendant un deuxième intervalle de temps, pour le premier cas, elle est égale à environ 82% de l'amplitude maximum pendant la modulation alors que dans le deuxième cas, elle est égale à 0% de l'amplitude maximum pendant le temps de modulation.

Aujourd'hui, de plus en plus de normes imposent que les lecteurs sans contact supportent les deux types de protocoles de transmission A et B. La fréquence normalisée de l'onde porteuse électromagnétique est commune à ces deux protocoles et est généralement égale à 13,56 MHz.

Un des critères majeurs de performance d'un lecteur est la portée du champ électromagnétique rayonné qui doit être la plus grande possible. Ainsi, les constructeurs s'efforcent de développer la portée de leur système d'émission par des moyens autres que l'augmentation de la source de tension. Cependant, l'augmentation de la portée doit être effectuée sans risque de saturer ou de détruire la carte quand celle-ci est présentée à proximité du lecteur.

Un des facteurs pour satisfaire ce critère de performance est l'utilisation d'antennes présentant un fort coefficient de surtension. A la fréquence de résonance, la tension efficace aux bornes de la self, source des ondes porteuses électromagnétiques, est sensiblement égale à Q fois la tension aux bornes du circuit ; Q étant le facteur de surtension. Ainsi, plus l'antenne présente un fort coefficient de surtension et plus la portée de son champ rayonné est grand.

Pour obtenir une modulation du signal émis à 100% de son amplitude, la méthode couramment utilisée aujourd'hui consiste à couper la source de tension aux bornes du circuit pendant le temps correspondant à la coupure du champ selon le protocole A en vigueur, afin de stopper l'émission de l'onde porteuse électromagnétique.

En pratique, la coupure du générateur fait chuter la tension à zéro mais augmente fortement l'impédance du circuit d'attaque de l'antenne. Il en résulte que l'antenne continue à émettre grâce aux charges accumulées dans le circuit, ce qui se traduit par une onde porteuse électromagnétique émise oscillante et amortie pendant un temps supérieur au temps de coupure. Par conséquent, pendant la coupure du signal, l'amplitude du champ rayonné vers la carte n'est pas nulle et le champ émis par l'antenne ne correspond donc pas à une modulation de 100% d'amplitude de l'onde porteuse électromagnétique ; et ce, pendant un temps inférieur au temps de coupure théorique, l'amplitude étant inférieure ou égale à 5% de l'amplitude maximum du signal rayonné.

Par conséquent, l'utilisation d'antenne à fort coefficient de surtension est compatible avec un lecteur de type B, car pour un tel lecteur, l'onde porteuse électromagnétique est toujours active puisqu'elle n'est modulée qu'à 10% de son amplitude tandis qu'elle est peu compatible avec un lecteur de type A. En effet, le faible amortissement obtenu avec une antenne à fort coefficient de surtension n'a crue peu d'influence sur la forme d'une onde modulée à 10% de son amplitude.

Afin d'utiliser une antenne compatible pour les deux types de lecteur, une première solution consiste à utiliser une antenne à coefficient de surtension réduit et présentant un amortissement compatible avec les exigences de la norme A, mais au détriment des performances en norme B.

Une deuxième solution consiste à utiliser un amplificateur linéaire à transistors bipolaires, qui permet d'amortir le signal émis par l'antenne afin que le champ rayonné soit nul pendant la coupure. Cette solution permet d'obtenir un amortissement escompté au détriment du rendement. En effet, le circuit présente une impédance de sortie constante, mais nécessite des courants de polarisation élevés. La mise en oeuvre du circuit est plus complexe.

Une troisième solution qui consiste à utiliser en commutation des transistors à effet de champ afin de réduire les pertes et de ne pas pénaliser la portée du lecteur de type B. L'utilisation de tels transistors commute le circuit entre les positions "ouvert" et "fermé" et permet d'obtenir un champ rayonné maximum par augmentation de l'impédance présentée quand le circuit est ouvert durablement mais au détriment de la forme de l'onde dans le cas du protocole de type A.

Le document WO 00/46917 décrit un modulateur, pouvant changer le taux de modulation du signal émis par les données transmises quand le signal est modulo en amplitude.

### Exposé de l'invention

C'est pourquoi un premier but de l'invention est de fournir un dispositif permettant l'émission d'une onde porteuse électromagnétique de l'antenne du lecteur vers la carte sans contact dans des conditions de performance maximale lors de l'émission de signaux de protocole de type A.

Un deuxième but de l'invention est de fournir un dispositif permettant l'émission d'une onde porteuse électromagnétique de l'antenne du lecteur vers la carte sans contact dans des conditions de performance maximale lors de l'émission de signaux de protocole de type A et de signaux de protocole de type B.

L'objet de l'invention concerne donc un dispositif d'émission de données par rayonnement d'ondes électromagnétiques dans un système d'émission/réception sans contact vers un objet sans contact, les bits de données transmis correspondant à l'alternance d'un premier intervalle de temps pendant lequel des ondes électromagnétiques sont émises à une fréquence porteuse prédéterminée et d'un deuxième intervalle de temps de coupure pendant lequel il y a coupure de l'émission des ondes électromagnétiques à la fréquence porteuse prédéterminée. Le dispositif comprend des moyens de génération pour générer pendant le deuxième intervalle de temps de coupure des ondes électromagnétiques ayant une fréquence supérieure à la fréquence fondamentale de la coupure provoquant un affaiblissement du champ rayonné par l'antenne supérieur à une valeur prédéterminée.

### Description brève des figures

Les buts, objets et caractéristiques de l'invention apparaîtront plus clairement à la lecture de la description qui suit faite en référence aux dessins dans lesquels :
la figure 1 représente l'enveloppe du champ émis selon le protocole A, obtenue par coupure de la fréquence de l'onde porteuse,
la figure 2 représente l'enveloppe du champ émis selon l'invention,
la figure 3 représente la courbe d'amplitude du champ rayonné par l'antenne par rapport à la fréquence du signal reçu,
la figure 4 est un bloc-diagramme schématique des fonctions du dispositif selon l'invention.

### Description détaillée de l'invention

Les données sont transmises du lecteur à la carte à puce par des signaux RF selon deux types de protocole A et B de transmission de données soumis à la norme en vigueur aujourd'hui. Le protocole de type A module l'onde porteuse électromagnétique émise par le lecteur à 100% de son amplitude. L'amplitude de l'onde porteuse périodique est maximum et constante pendant un premier intervalle de temps puis nulle pendant un deuxième intervalle de temps. Le protocole de type B module l'onde porteuse électromagnétique émise par le lecteur à 10% de son amplitude. L'amplitude de l'onde porteuse périodique est maximum et constante pendant un premier intervalle de temps puis égale à 10% de son amplitude maximum pendant un deuxième intervalle de temps. La fréquence de l'onde porteuse électromagnétique est de façon standard aujourd'hui égale à 13,56 MHz et c'est pourquoi cette valeur est choisie comme valeur de référence dans ce document. Cependant, la fréquence de l'onde porteuse électromagnétique pourrait être différente sans sortir du cadre de l'invention.

Selon le protocole de transmission de données de type A, l'onde porteuse électromagnétique est coupée pendant un intervalle de temps t par coupure de la fréquence d'émission de 13,56 MHz.

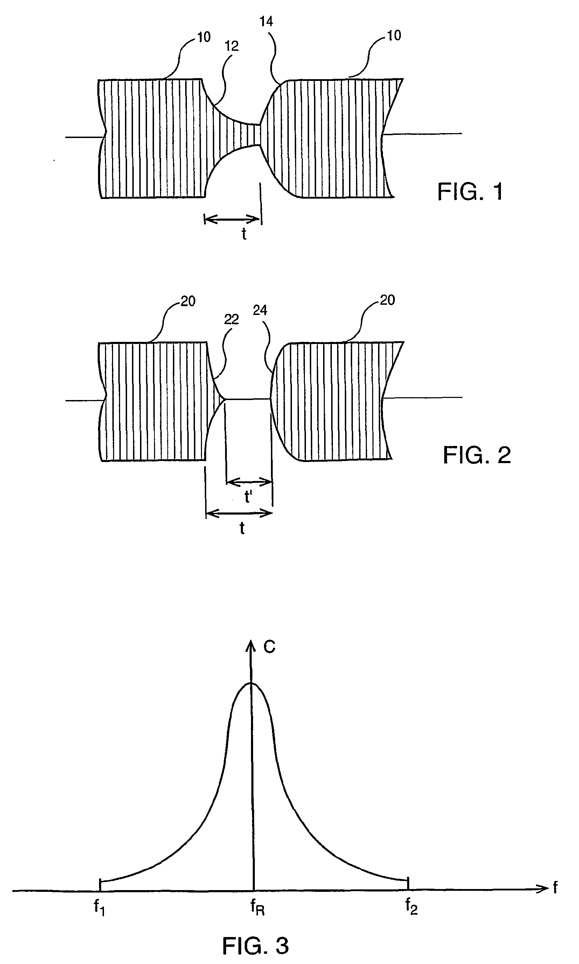

L'enveloppe du champ rayonné alors par l'antenne du lecteur est représentée sur la figure 1. Tant que la fréquence de l'onde porteuse est égale à 13,56 MHz, le champ rayonné 10 est maximum. Lorsque la fréquence est coupée, le champ rayonné diminue progressivement selon la courbe 12 jusqu'à atteindre une valeur minimum différente de zéro à la fin de l'intervalle de temps t. A la fin de l'intervalle de temps t la fréquence de l'onde porteuse est de nouveau égale à 13,56 MHz et l'amplitude du champ rayonné augmente selon la courbe 14 jusqu'à atteindre son maximum 10. De cette façon la modulation obtenue de l'amplitude de l'onde porteuse n'est pas satisfaisante lorsqu'il s'agit d'une modulation à 100% de l'amplitude maximum. En effet, une telle modulation est obtenue lorsque une valeur minimum de l'amplitude du champ rayonné est atteinte (aujourd'hui la norme impose moins de 5% de l'amplitude maximum) pendant un certain temps dans l'intervalle de temps t. Or la diminution du champ rayonné à la coupure de la fréquence de l'onde porteuse représentée par la courbe 12 n'est pas assez importante pour obtenir une forme d'onde satisfaisante en terme de modulation à 100% de l'amplitude maximum.

La figure 2 représente l'enveloppe du champ rayonné par l'antenne du lecteur par le dispositif selon l'invention. Tant que la fréquence de l'onde porteuse est égale à 13,56 MHz, le champ rayonné 20 est maximum. Pour obtenir une coupure de l'amplitude de l'onde porteuse pendant le temps t, la fréquence du signal envoyé vers l'antenne est alors double de la fréquence de résonance pendant le temps t. L'antenne reçoit alors un signal d'une fréquence de 27,12 MHz et aucun champ n'est rayonné par l'antenne puisque cette fréquence est définie comme étant hors de la bande passante de l'antenne. En réalité, le champ rayonné obtenu lors du changement de fréquence diminue rapidement selon une courbe très amortie 22 jusqu'à atteindre une valeur négligeable pendant un temps significatif t'. Lorsque la fréquence de l'onde porteuse électromagnétique est 13,56 MHz, le champ 24 rayonné par l'antenne augmente jusqu'à atteindre sa valeur maximum 20. La forme d'onde obtenue est alors satisfaisante en terme de modulation à 100% de l'amplitude maximum. Ce résultat peut être obtenu avec une fréquence du signal émis hors de la bande passante de l'antenne et supérieure à la fréquence fondamentale de la coupure.

Le champ rayonné par l'antenne est illustré sur la figure 3 en fonction de la fréquence du signal reçu par l'antenne. Ce champ est maximum à la fréquence de résonance f_{R}. Pour une fréquence inférieure ou égale à la fréquence f₁, l'amplitude du champ rayonné est inférieur à 5% de l'amplitude du champ rayonné à la fréquence de résonance f_{R}. De la même façon, f₂ représente la fréquence au dessus de laquelle l'amplitude du champ rayonné est inférieur à 5% de l'amplitude du champ rayonné à la fréquence de résonance. A la fréquence générée lors de la coupure satisfaisante pour obtenir une coupure de champ valable selon le protocole A, l'amplitude du champ rayonné par l'antenne doit être inférieur de 5% de l'amplitude maximum du champ rayonné. Il faut donc que la fréquence générée lors de la coupure soit telle qu'elle entraîne un affaiblissement du champ rayonné égal ou supérieur à une valeur prédéterminée, cette valeur étant de préférence égale à 30 dB. La fréquence générée lors de la coupure est soit inférieure à f₁ et différente de zéro, soit supérieure à f₂. Dans un mode de réalisation préférentiel, elle est supérieure ou égale à 2 fois f_{R}. Selon le mode de réalisation préféré de l'invention, la fréquence générée lors de la coupure est égale à deux fois la fréquence de résonance soit 27,120 MHz.

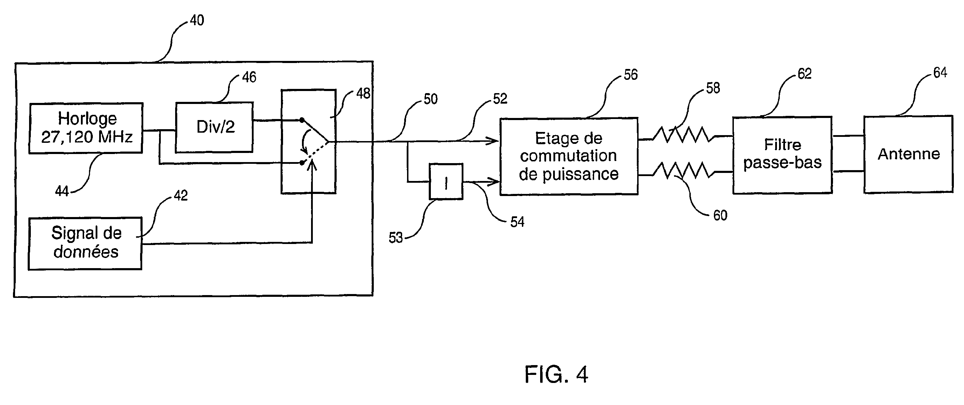

Le dispositif électronique illustré sous forme de bloc diagramme sur la figure 4 représente un mode de réalisation préféré de l'invention dans lequel le signal de données 42 commande un interrupteur 48 à deux positions. La première position correspond à un signal dont la fréquence est égale à la fréquence de 27,120 MHz générée lors de la coupure fourni par une horloge 44. La deuxième position correspond à un signal dont la fréquence est égale à la fréquence standard de 13,56 MHz fourni par un diviseur de fréquence 46. Les moyens ci-dessus sont inclus dans une logique programmable 40 dont le signal de sortie 50 est appliqué à l'étage de commutation de puissance par deux entrées, l'entrée 52 correspondant au signal de sortie de la logique programmable 40 alors que l'autre entrée 54 est ce même signal de sortie inversé par un inverseur 53. L'étage de commutation de puissance 56 comprend deux transistors à effet de champ connectés respectivement aux deux entrées 52 et 54 et destinés à commuter à la fréquence reçue par l'une des deux entrées, l'un des transistors étant « ouvert » pendant que l'autre transistor est « fermé ». Les deux signaux de sortie de l'étage de commutation de puissance passent par deux résistances 58 et 60 avant d'être filtrés par un filtre passe-bas 62 destiné à ne laisser passer que les signaux de fréquence fondamentale. En sortie du filtre 62 les deux signaux sont émis par l'antenne 64 vers la carte sans contact.

## Revendications

1. Dispositif d'émission de données (40) par rayonnement d'ondes électromagnétiques dans un système d'émission/réception sans contact vers un objet sans contact, les bits de données transmis correspondant à l'alternance d'un premier intervalle de temps pendant lequel des ondes électromagnétiques sont émises à une fréquence porteuse prédéterminée et d'un deuxième intervalle de temps de coupure pendant lequel il y a coupure de l'émission des ondes électromagnétiques à ladite fréquence porteuse prédéterminée
**caractérisé en ce qu'**il comprend des moyens (44, 46, 48) de génération pour générer pendant ledit deuxième intervalle de temps de coupure des ondes électromagnétiques ayant une fréquence lors de la coupure supérieure à la fréquence que, à la coupure, provoque un affaiblissement du champ rayonné par l'antenne supérieur à une valeur prédéterminée.

2. Dispositif d'émission de données selon la revendication 1, dans lequel ledit affaiblissement du champ rayonné à ladite fréquence générée lors de la coupure, est au moins égal à 30 dB.

3. Dispositif d'émission de données selon la revendication 2, dans lequel ladite fréquence générée lors de la coupure est en dehors d'une plage de fréquence (f1 - f2) correspondant à une amplitude du champ rayonné par l'antenne supérieure ou égale à 5% de l'amplitude du champ rayonné à ladite fréquence porteuse prédéterminée.

4. Dispositif d'émission de données selon la revendication 3, dans lequel ladite fréquence générée lors de la coupure est égale au double de ladite fréquence porteuse prédéterminée.

5. Dispositif d'émission de données selon la revendication 4, comprenant une logique programmable (40) fournissant un premier signal à ladite fréquence porteuse prédéterminée pendant un premier intervalle de temps et un deuxième signal ayant une fréquence double de ladite fréquence porteuse prédéterminée pendant un deuxième intervalle de temps, la commutation entre ledit premier signal et ledit deuxième signal étant commandé par le signal de données (42).

6. Dispositif d'émission de données selon la revendication 5, dans lequel ladite fréquence porteuse prédéterminée est égale à 13,56 MHz.

7. Dispositif d'émission de données selon la revendication 6, dans lequel ladite logique programmable (40) comprend une horloge (44) à 27,12 MHz et un diviseur de fréquence (46) fournissant ladite fréquence porteuse prédéterminée à 13, 56 MHz, ladite fréquence double à 27,12 MHz, étant fournie par ladite horloge.

8. Dispositif d'émission de données selon la revendication 7, comprenant un étage de commutation de puissance (56) comportant deux transistors à effet de champ commandés par les sorties de ladite logique programmable (40) de manière à ce que l'un desdits transistors soit passant pendant que l'autre transistor est bloqué.

9. Dispositif d'émission de données selon l'une quelconque des revendication précédentes, dans lequel les données transmises sont conformes à la norme de transmission de données ISO 14443 selon le protocole de type A dans lequel les bits de données sont générés par des coupures du champ électromagnétique émis.

## Claims

1. A transmission device (40) using electromagnetic wave radiation in a contactless transceiver system toward a contactless object, the data bits transmitted corresponding to the alternation of a first time interval during which electromagnetic waves are emitted at a predetermined carrier frequency and a second splitting time interval during which there is a split in transmission of the electromagnetic waves at said predetermined carrier frequency
**characterized in that** it includes generation means (44, 46, 48) for generating, during said second splitting time interval, electromagnetic waves with a frequency greater than the frequency that, at the split, causes an attenuation of the radiated field by the antenna greater than a predetermined value.

2. The data transmission device according to claim 1, in which said attenuation of the radiated field at said frequency generated during the split is less than or equal to 30 dB.

3. The data transmission device according to claim 2, in which said frequency generated during the split is outside the frequency range (f1 - f2) corresponding to an amplitude of the field radiated by the antenna greater than or equal to 5 percent of the amplitude of the field radiated at said predetermined carrier frequency.

4. The data transmission device according to claim 3 in which said frequency generated during the split is equal to the double of said predetermined carrier frequency.

5. The data transmission device according to claim 4, including programmable logic (40) supplying a first signal at said predetermined carrier frequency for an initial time interval and a second signal having a frequency which is double that of said predetermined carrier frequency during a second time interval, the switching between said first signal and said second signal being controlled by the data signal (42).

6. The data transmission device according to claim 5, in which said predetermined carrier frequency is equal to 13.56 MHz.

7. The data transmission device according to claim 6, in which said programmable logic (40) includes a clock (44) operating at 27.12 MHz and a frequency divider (46) supplying said predetermined carrier frequency at 13.56 MHz, said double frequency at 27.12 MHz being provided by said clock.

8. The data transmission device according to claim 7, including a power switching stage (56) featuring two field effect transistors controlled by the outputs of said programmable logic (40) such that one of said transistors is "open" while the other transistor is "closed".

9. The data transmission device according to any one of the previous claims, in which the data transmitted are compliant with the data transmission standard ISO 14443 according to type A protocol in which the data bits are generated by splits of the electromagnetic field emitted.

## Patentansprüche

1. Vorrichtung zum Senden von Daten (40) durch Ausstrahlung elektromagnetischer Wellen in einem kontaktlosen Sende-/Empfangssystem zu einem kontaktlosen Gegenstand, wobei die übertragenen Datenbits der Wechselfolge eines ersten Zeitintervalls, während dem elektromagnetische Wellen mit einer vorbestimmten Trägerfrequenz gesendet werden, und eines zweiten Unterbrechungszeitintervalls entsprechen, während dem das Senden der elektromagnetischen Wellen mit der vorbestimmten Trägerfrequenz unterbrochen ist,
**dadurch gekennzeichnet, dass** sie Erzeugungseinrichtungen (44, 46, 48) aufweist, um während des zweiten Unterbrechungszeitintervalls elektromagnetischen Wellen mit einer Frequenz bei der Unterbrechung zu erzeugen, die höher ist als die Frequenz, die bei der Unterbrechung eine Dämpfung des von der Antenne ausgestrahlten Felds bewirkt, die höher ist als ein vorbestimmter Wert.

2. Vorrichtung zum Senden von Daten nach Anspruch 1, bei der die Dämpfung des mit der bei der Unterbrechung erzeugten Frequenz ausgestrahlten Felds mindestens gleich 30 dB ist.

3. Vorrichtung zum Senden von Daten nach Anspruch 2, bei der die bei der Unterbrechung erzeugte Frequenz außerhalb eines Frequenzbereichs (f1 - f2) entsprechend einer Amplitude des von der Antenne ausgestrahlten Felds liegt, die höher als oder gleich 5 % der Amplitude des mit der vorbestimmten Trägerfrequenz ausgesendeten Felds ist.

4. Vorrichtung zum Senden von Daten nach Anspruch 3, bei der die bei der Unterbrechung erzeugte Frequenz gleich dem Doppelten der vorbestimmten Trägerfrequenz ist.

5. Vorrichtung zum Senden von Daten nach Anspruch 4, die eine programmierbare Logik (40) aufweist, welche ein erstes Signal mit der vorbestimmten Trägerfrequenz während eines ersten Zeitintervalls und ein zweites Signal mit einer Frequenz, die das Doppelte der vorbestimmten Trägerfrequenz ist, während eines zweiten Zeitintervalls liefert, wobei die Umschaltung zwischen dem ersten Signal und dem zweiten Signal vom Datensignal (42) gesteuert wird.

6. Vorrichtung zum Senden von Daten nach Anspruch 5, bei der die vorbestimmte Trägerfrequenz 13,56 MHz beträgt.

7. Vorrichtung zum Senden von Daten nach Anspruch 6, bei der die programmierbare Logik (40) einen Taktgeber (44) mit 27,12 MHz und einen Frequenzteiler (46) aufweist, der die vorbestimmte Trägerfrequenz mit 13,56 MHz liefert, wobei die doppelte Frequenz mit 27,12 MHz vom Taktgeber geliefert wird.

8. Vorrichtung zum Senden von Daten nach Anspruch 7, die eine Leistungsschaltstufe (56) enthält, welche zwei Feldeffekttransistoren aufweist, die von den Ausgängen der programmierbaren Logik (40) so gesteuert werden, dass einer der Transistoren leitend ist, während der andere Transistor gesperrt ist.

9. Vorrichtung zum Senden von Daten nach einem der vorhergehenden Ansprüche, bei der die übertragenen Daten der Datenübertragungsnorm ISO 14443 gemäß dem Protokoll vom Typ A entsprechen, bei dem die Datenbits durch Unterbrechungen des gesendeten elektromagnetischen Felds erzeugt werden.
